# EUROPÄISCHE PATENTANMELDUNG

(11) **EP 2 859 799 A1**
(43) Veröffentlichungstag der Anmeldung: **15.04.2015**
(21) Anmeldenummer: 13188244.1
(22) Anmeldetag: 11.10.2013
(51) Int. Cl.: A23L 1/08, A23L 1/09, A23G 3/34, A23G 3/38, A23G 3/42, A23L 1/236

(54) **Sirup**

(71) Anmelder: Instantina Nahrungsmittel Entwicklungs und Produktionsges.m.b.H., 2263 Dürnkrut (AT)
(72) Erfinder: Wolfslehner, Leopold, 7441 Pilgersdorf (AT)
(74) Vertreter: Patentanwälte Barger, Piso & Partner

(57) **Zusammenfassung**

Die Erfindung betrifft einen Sirup zum Süßen.

Um den Zuckergehalt bei ansonsten gleichen Eigenschaften zu reduzieren ist vorgesehen, dass er, angegeben in Gew.-%, aus:
50 - 99,8 % Oligofructose und/oder andere lösliche Ballaststoffe mit einem
Trockengehalt von etwa 74 %,
0 - 20 % Glyzerin,
0,001- 5 % Süßstoff(en),
0 - 10 % färbendem Karamellsirup,
der Rest Wasser,

besteht.

## Beschreibung

Die Erfindung betrifft einen Sirup zum Süßen, entsprechend dem Oberbegriff des Anspruches 1.

Sirup wird seit undenklicher Zeit zum Süßen von Speisen verwendet. Es handelt sich beim Sirup um eine dickflüssige, konzentrierte Lösung, die zumeist durch Eindicken zuckerhältiger Flüssigkeiten gewonnen wird, es kann sich dabei um den Saft von Maisstärke, die durch einen enzymatischen Prozess in Zucker verwandelt wurde handeln, um Rohrzuckersaft, um Agavensirup, um Ahornsirup und Ähnliches. Auch Honig kann als Sirup verwendet und bezeichnet werden.

Je nach dem Ort der Verwendung wird der Sirup zum Übergießen von Süßspeisen, als Brotaufstrich, zum Backen oder auch ganz allgemein zum Süßen verwendet. Sämtlichen bekannten Siruparten gemein ist der hohe Zuckeranteil, der zumeist bei 75 % (alle Angaben in dieser Beschreibung und den Ansprüchen sind, soweit nicht anders angegeben, Gewichtsprozent). Ahornsirup aus Kanada ist mit "nur" 60 % Zucker schon als leicht zu betrachten.

Aus den verschiedensten Ursachen, sei es um die mit der Zuckeraufnahme verbundene Energieaufnahme (Gewichtsprobleme) zu vermeiden, sei es aus gesundheitlichen Gründen bei Personen, die an Diabetes leiden, oder auch aus anderen Ursachen, gibt es eine Vielzahl von Menschen, die Zucker nur in geringer Menge zu sich nehmen sollen oder wollen. Da die Benutzung, Verarbeitung und der Genuss von Sirup in vielen Kulturkreisen tief verwurzelt ist, hier sei besonders an den gesamten arabischen und mittelöstlichen Raum gedacht, aber auch an Kanada und viele anderen Länder, wie Australien und Neuseeland, besteht ein Bedarf an einem Sirup, der organoleptisch, im Hinblick auf seine Haltbarkeit und besonders auch auf seine Verarbeitungsmöglichkeiten dem Natursirup vollständig entspricht, der aber wesentlich weniger Zucker enthält als die eingangs genannten, bisher bekannten Arten. In diesem Zusammenhang ist es angebracht, darauf hinzuweisen, dass es gerade auch in den Kulturkreisen, in denen Sirup häufig und traditionellerweise verwendet wird, einen relativ hohen Anteil von Diabetikern gibt, so beispielsweise im arabischen Raum um die 20 % der Bevölkerung, und bei den Inuit nach verschiedenen Schätzungen noch mehr.

Es besteht somit ein Bedarf an einem Sirup zum Süßen, der die gleiche Konsistenz aufweist, wie die eingangs genannten Produkte, der von der Lagereigenschaft und dem mikrobiologischen Verhalten her ähnlich zu beurteilen ist, ebenso vom Trockensubstanzgehalt; dessen Geschmack und Süßeintensität mit dem jeweiligen bisher verwendeten Sirup übereinstimmt, somit in möglichst weiten Grenzen an das zu ersetzende Produkt anpassbar ist; ein Produkt, das vom Backverhalten, vom Verhalten beim Übergießen von Speisen oder beim Verwenden als Brotaufstrich die gleichen Eigenschaften zeigt und, ebenso wie der bisher bekannte Sirup, allgemein zum Süßen verwendet werden kann und dessen Färbung auf gewünschte Weise der Färbung vorbekannter Sirupsorten anpassbar ist.

Es ist Aufgabe der Erfindung, einen derartigen Sirup zu schaffen.

Erfindungsgemäß werden diese Ziele durch eine Zusammensetzung erreicht, die der im kennzeichnenden Teil des Anspruches 1 angeführten entspricht, mit anderen Worten, es werden:
50 - 99,8 % Oligofructose oder andere lösliche Ballaststoffe mit einem Trockengehalt von etwa 74 %,
0 - 20 % Glyzerin,
0,001 - 5 % Süßstoffe,
0 - 10 % färbender Karamellsirup,
der Rest Wasser,
gemischt.

Die löslichen Ballaststoffe, wie beispielsweise Oligofructose, verleihen dem Produkt eine gewisse Viskosität, das Glyzerin dient ebenfalls der Beeinflussung der Viskosität. Beispiele für weitere lösliche Ballaststoffe, die einzeln oder in Kombination verwendet werden können: Acaciagum, resistente Dextrine, lösliche Weizenfaser, Xyclodextrine und Ähnliches.

Die Süßstoffe weisen eine so große Schwankungsbreite Ihres Gehaltes auf, weil es sie in großer Zahl und damit in extremer Bandbreite im Hinblick auf ihre Süßungskraft gibt, so sind Steviolglycoside, Succralose, Cyclamat, Saccharin, Acesulfam K, aber auch alle anderen im Handel erhältlichen Süßungsmittel verwendbar, wobei die Süßungskraft zwischen dem 10-fachen um dem 3.500-fachen von Zucker betragen kann, was, gemeinsam mit dem unterschiedlich angestrebten Endsüßigkeitseindruck diese große Bandbreite des Gehaltes ergibt.

Der färbende Karamellsirup dient, wie die Bezeichnung schon sagt, der Farbgebung, um zu einem Endprodukt zu gelangen, das dem nachgebildeten Produkt möglichst gleicht.

Der Rest auf 100 % ist Wasser, dabei wird das in der Oligofructose bzw. lösliche Ballaststoffe enthaltene Wasser (ca. 26 %) nicht mit eingerechnet.

Als Beispiel soll ein Sirup mit Stevioglycoside als Süßstoff genannt werden, bei dem die Mischung aus:
89,9500 kg Beneo Orafti L95 flüssig, einer im Handel erhältlichen Oligofructose;
9,7900 kg Glycerin PH EUR 99,5 %, ebenfalls im Handel erhältlich;
0,2100 kg. Stevia RS 60 % REB A, einer im Handel erhältlichen Stevrioglycosidzusammensetzung; und
Karamellsirup 75/760-01 in einer Menge von 0,0500 kg
gemischt wird. Die angegebenen Prozentsätze sind hier Herstellerhinweise.

Damit erhält man die gleiche Süßkraft, wie sie Agaven- bzw. Ahornsirup, aber auch Honig aufweist, doch enthält die Mischung (die hier angegebenen Prozentsätze beziehen sich jeweils auf die Werte des Agaven- bzw. Ahornsirups bzw. Honigs = 100 und sind daher dimensionslos) um 45 % weniger Kalorien (Joule); um 82 % weniger Kohlenhydrate; um 95 % weniger Zucker. Der Ballaststoffgehalt liegt im Bereich von 63 Gew.-%, bezogen auf das Gesamtgewicht des erfindungsgemäßen Produktes.

Eine andere Zusammensetzung besteht aus (bzw. enthält im Wesentlichen):
90,05 kg Beneo Orafti L95 flüssig (Oligofructose);
9,79 kg. Glycerin PH EUR 99,5%, K60 KG;
0,011 kg. Sucralose JK SWEET, und
0,05 KG Karamellsirup 75/760-01.

Die angegebenen Bestandteile sind unter diesen Bezeichnungen im Handel erhältlich, die angegebenen Prozentsätze sind Herstellerhinweise. Auch hier ist die Reduzierung der Kalorien, Kohlenhydrate und Zucker praktisch die Gleiche wie beim ersten Beispiel, die Süßkraft ist die Gleiche wie beim Agaven- bzw. Ahornsirup bzw. Honig, der Geschmack ist insofern unterschiedlich zur ersten Mischung, als Sucralose rein süß schmeckt, während Steviolglycosid einen leicht bitteren Nachgeschmack hinterlässt, der aber in vielen Fällen gewünscht und geschätzt ist.

Die genannten Bestandteile können durch zahlreiche andere ersetzt werden, die für den Fachmann auf dem Gebiet der Lebensmittel in Kenntnis der Erfindung leicht ausgewählt und passend verarbeitet werden können. Es können insbesondere verschiedene Süßstoffe in Kombination verwendet werden, entweder um die Endsüße genau zu erreichen, oder um zu einem gewünschten Süßegeschmack zu kommen.

"Etwa" steht für ± 10% des angegebenen Wertes, "etwa 74 %" somit für 66,6 % - 81,4 %.

Da es möglich ist, die erfindungsgemäß erhaltenen Sirupe mit Geschmacksmitteln etc. zu versetzen, ist festzuhalten, dass bei derartigen Produkten diese Zusätze bei der Bestimmung ihrer Erfindungsgemäße nicht berücksichtigt werden.

## Patentansprüche

1. Sirup zum Süßen, **dadurch gekennzeichnet, dass** er, angegeben in Gew.-%, aus:
50 - 99,8 % Oligofructose und/oder andere lösliche Ballaststoffe mit einem Trockengehalt von etwa 74 %,
0 - 20 % Glyzerin,
0,001 - 5 % Süßstoff(en),
0 - 10 % färbendem Karamellsirup,
der Rest Wasser,
besteht.

2. Sirup nach Anspruch 1, **dadurch gekennzeichnet, dass** als lösliche Ballaststoffe Acaciagum und/oder resistente Dextrine und/oder lösliche Weizenfaser und/oder Xyclodextrine verwendet werden.
